# EUROPEAN PATENT APPLICATION

(11) **EP 4 550 144 A1**
(43) Date of publication of application: **07.05.2025**
(21) Application number: 24207221.3
(22) Date of filing: 17.10.2024
(51) Int. Cl.: G06F 9/50

(54) **COMPUTER-IMPLEMENTED DISTRIBUTED PROCESSING SCHEME**

(30) Priority: 30.10.2023 GB 202316527
(71) Applicant: Sony Interactive Entertainment Europe Limited, London W1F 7LP (GB); Sony Interactive Entertainment LLC, San Mateo, CA 94404 (US)
(72) Inventor: GREEN, Lawrence Martin, c/o Sony Interactive Entertainment Europe Limited, London, W1F 7LP (GB); COLES, David, c/o Sony Interactive Entertainment LLC, CA94404 (US); HUME, Oliver George, c/o Sony Interactive Entertainment Europe Limited, London, W1F 7LP (GB)
(74) Representative: Murgitroyd & Company

(57) **Abstract**

A computer-implemented method of executing a distributed processing scheme, the method comprising receiving, at a first computing device, a first request associated with a processing task, identifying a plurality of computing devices, wherein each computing device of the plurality of computing devices is remote from the first computing device and each computing device satisfies at least one criterion of a predetermined list of criteria, determining a priority value for each computing device, wherein the priority value is at least partially based on the predetermined list of criteria, selecting one of the computing devices, wherein the selection is determined at least partially based on the priority value determined for each computing device, sending a second request from the first computing device to the selected computing device via a wireless communication channel, the second request instructing the selected computing device to complete a portion of the processing task.

## Description

### BACKGROUND

The present specification relates to a distributed data processing scheme for implementation by a first computing device and one or more geographically remote computing devices.

In computing, particularly in the field of computer games or video games, it is generally desirable to reduce data processing time where possible, to improve efficiency and reduce down-time for a user. As video game files are becoming increasingly large, and processor intensive, particularly games with in-depth graphics that require rendering, video game files are often taking a relatively long time to download, install and update, which means delays for the end user.

### SUMMARY

Aspects of the present disclosure are set out in the accompanying independent and dependent claims. Combinations of features from the dependent claims may be combined with features of the independent claims as appropriate and not merely as explicitly set out in the claims.

According to an aspect of the present disclosure, there is provided a computer-implemented method of executing a distributed processing scheme, the method comprising receiving, at a first computing device, a first request associated with a processing task, identifying a plurality of computing devices, wherein each computing device of the plurality of computing devices is remote from the first computing device and each computing device satisfies at least one criterion of a predetermined list of criteria, determining a priority value for each computing device of the plurality of computing devices, wherein the priority value is at least partially based on the predetermined list of criteria, selecting one of the plurality of computing devices, wherein the selection is determined at least partially based on the priority value of each computing device, sending a second request from the first computing device to the selected computing device of the plurality of computing devices via a wireless communication channel, the second request instructing the selected computing device to complete a portion of the processing task.

Optionally, the processing task may be related to a video game file or a video game asset.

It will be appreciated that each computing device comprises a processor. Each computing device may equivalently be referred to as a processing device.

As such, the distributed processing scheme increases the processing resources available to the first computing device, by outsourcing at least a portion of the processing task to a geographically remote computing device. This can advantageously improve efficiency and reduce the amount of time taken to complete the processing task. In particular, there are certain tasks that a computing device cannot process simultaneously, and so these tasks are usually processed one after the other, which takes a longer amount of time. In the present disclosure, one of said tasks, or sub-tasks, can be shared or outsourced to a remote computing device, allowing said tasks, or sub-tasks, to be processed substantially simultaneously by two computing devices. Again, this reduces wait time or down-time at the first computing device.

In the present disclosure, the priority value may equivalently be referred to as a priority score or priority rank.

In some embodiments, the portion of the processing task may be the entire processing task.

The method may include ranking or sorting the plurality of computing devices based on their associated priority value.

The method may include determining if one or more properties of each computing device satisfy at least one criterion of the predetermined list of criteria.

The priority value may be at least partially determined based on how well a plurality of properties of each computing device satisfy the predetermined list of criteria.

Identifying the plurality of computing devices may comprise an initial step of identifying a number of computing devices and then determining whether one or more properties of each computing device satisfy at least one criterion of the predetermined list of criteria.

Optionally, only computing devices that satisfy at least one criterion of the predetermined list of criteria may be identified. Thus, the predetermined list of criteria may form part of a list of search conditions used to identify the plurality of computing devices.

Optionally, each computing device of the plurality of computing devices must satisfy two or more criteria of the predetermined list of criteria.

Optionally, each computing device of the plurality of computing devices must satisfy each criterion of the predetermined list of criteria.

The selected computing device may have the best priority value of the plurality of computing devices. It will be appreciated that the term "best" means most preferable. The best priority value may be the highest priority value (e.g. 100). In other embodiments, the best priority value may be the lowest priority value (e.g. 1).

Optionally, the first computing device and each computing device of the plurality of computing devices have consented to be part of the distributed processing scheme. Any computing devices that have not consented to be part of the distributed processing scheme, or have refused consent, may not be included in the plurality of computing devices.

The method may further comprise determining whether any of the plurality of computing devices is on a list of preferred devices. The priority value may be at least partially based on this determination. In some embodiments, a computing device that is on a list of preferred devices may be allocated an improved or better priority value.

The method may further comprise determining whether any of the plurality of computing devices has successfully communicated with the first computing device previously. The priority value may be at least partially based on this determination. In some embodiments, a computing device that has successfully communicated with the first computing device previously may be allocated an improved or better priority value. The distributed processing scheme may prioritise communications between computing devices that have shared data previously.

Optionally, each criterion of the plurality of criteria may provide a contribution to the priority value allocated to a computing device.

Optionally, the contribution of each criterion may have a pre-defined weighting. Thus, in some embodiments, each criterion does not contribute equally to the priority value allocated to a computing device.

Optionally, the predetermined list of criteria includes the following geographic criterion: a geographical location of the computing device is within a predetermined range of a geographical location of the first computing device.

In some embodiments, determining the priority value for each computing device includes determining a contribution to the priority value based on the geographic criterion, wherein the computing device that is geographically closest to the first computing device will have the best contribution to the priority value.

Optionally the predetermined list of criteria includes the following processor criterion: a current processing capability of the computing device exceeds a predetermined limit. The current processing capability may be the processing capability of the computing device at the time the priority value is determined. The current processing capability may be referred to as an available processing power of the computing device.

Optionally, the predetermined limit is at least partially based on a processing capability of the first computing device. For example, the predetermined limit may be set to exceed the processing capability of the first computing device, otherwise the first computing device may simply execute the processing task itself.

Optionally, the predetermined limit is at least partially based on estimated or actual requirements of the portion of the processing task.

Optionally, determining the priority value for each computing device includes determining a contribution to the priority value based on the processor criterion, wherein the computing device that has the greatest available processing power will have the best contribution to the priority value.

In some embodiments, the predetermined list of criteria includes the following criterion: the computing device is in an active state or an available state.

Optionally, in response to determining that a computing device of the plurality of computing devices is in an inactive state or an unavailable state, the computing device may be removed from the plurality of computing devices identified.

Optionally, in response to determining that a computing device of the plurality of computing devices is in an inactive state or an unavailable state, the computing device may be allocated a null or void priority value, such that the computing device cannot be selected.

In some embodiments, the predetermined list of criteria includes the following criterion: the computing device is one of a list of selected types of computing device.

In some embodiments the list of selected types of computing device may be dependent on one or more properties of the processing task. Thus, different types of processing tasks can be associated with a different list of selected types of computing device.

It will be appreciated that non-limiting examples of types of computing device may include, mobile phone, desktop PC, gaming console, laptop computer, tablet computer.

The priority value for each computing device may be at least partially based on the type of computing device. Determining the priority value for each computing device may include determining a contribution to the priority value based on the type of computing device. A processing task, or a portion of a processing task, may be associated with a preferred type of computing device, such that the preferred type of computing device will have the best contribution to the priority value.

In some embodiments, the method may include checking the security of the selected remote computing device prior to sending the second request. In some embodiments, one or more security requirements may be included in the list of predetermined criteria.

Optionally, determining the priority value for each computing device includes assessing one or more properties of the wireless communication channel between the first computing device and the computing device. The priority value may be at least partially based on an outcome of the assessment.

Optionally, the processing task includes downloading or decoding a digital resource sent by a remote processing device. The remote processing device may not be one of the plurality of computing devices. Optionally, the remote processing device may be a remote server, or a cloud computing device.

Determining the priority value for each computing device may include assessing one or more properties of a second wireless communication channel between the computing device and the remote processing device. The priority value may be at least partially based on an outcome of the assessment.

Optionally, assessing one or more properties of the first or second wireless communication channel comprises executing a ping test.

The method may further comprise receiving, at the first computing device via the wireless communication channel, data corresponding to the portion of the processing task. Optionally, the portion of the processing task may be the entire processing task. Thus, the entire processing task may be outsourced to the selected computing device.

The method may include executing another portion of the processing task on the first computing device.

It will be appreciated that the processing task may be divided into any number of portions. Thus, the distributed processing scheme may repeat the above process such that the first computing device sends a respective request to multiple selected computing devices of the plurality of computing devices.

It will be appreciated that the number of selected computing devices does not necessarily have to correspond to the number of portions of the processing task. A single computing device may be requested to process two or more portions of the processing task.

The step of selecting one of the plurality of computing devices may comprise selecting one of the plurality of computing devices for each portion of the processing task.

The method may include dividing or separating the processing task into a plurality of portions. Each portion may be executed by a different computing device of the plurality of computing devices.

Optionally, a first portion of the processing task is carried out by the first computing device. In some embodiments, the first computing device may not carry out any of the processing task.

The method may include sending a respective request from the first computing device to multiple selected computing devices of the plurality of computing devices via a respective wireless communication channel, the respective request instructing the selected computing device to complete a respective portion of the processing task.

If no response, or a negative response, is received at the first computing device to the second request after a given period of time has elapsed, the method may further comprise sending a third request from the first computing device to a second selected computing device of the plurality of computing devices via a wireless communication channel.

The second selected computing device may have the second-best priority value of the plurality of computing devices.

It will be appreciated that the distributed processing scheme may comprise contacting the plurality of computing devices in order of priority value until a successful response is received at the first computing device.

In a second aspect, the present disclosure provides a computing device comprising a processor and memory, the memory communicatively coupled to the processor, the memory comprising instructions operable, when executed by the processor, to cause the processor to carry out the method of any embodiment or example of the first aspect of this disclosure.

The computing device may be any type of computing device, such as but not limited to a mobile phone, a PC, a laptop, a tablet computer, or a gaming console.

In a further aspect, the present disclosure provides a computer program comprising instructions which when executed in a computerized system comprising at least one processor, cause the at least one processor to carry out the method of any embodiment or example of the first aspect of this disclosure.

### BRIEF DESCRIPTION OF THE DRAWINGS

Embodiments of this disclosure will be described hereinafter, by way of example only, with reference to the accompanying drawings in which like reference signs relate to like elements and in which:
**Figure 1** shows a schematic representation of a plurality of computing devices according to an embodiment of this disclosure;
**Figure 2** is a box diagram of a computing device according to an embodiment of this disclosure;
**Figure 3** is a flowchart showing a distributed processing scheme according to an embodiment of this disclosure;
**Figure 4** is a flowchart showing a portion of a distributed processing scheme according to an embodiment of this disclosure; and
**Figure 5** is a flowchart showing a portion of a distributed processing scheme according to an embodiment of this disclosure.

### DETAILED DESCRIPTION

Embodiments of this disclosure are described in the following with reference to the accompanying drawings. The following detailed description is merely illustrative in nature and is not intended to limit the embodiments of the subject matter or the application and uses of such embodiments. As used herein, the words "exemplary" and "example" mean "serving as an example, instance, or illustration." Any implementation described herein as exemplary or an example is not necessarily to be construed as preferred or advantageous over other implementations. Furthermore, there is no intention to be bound by any expressed or implied theory presented in the preceding technical field, background, or the following detailed description.

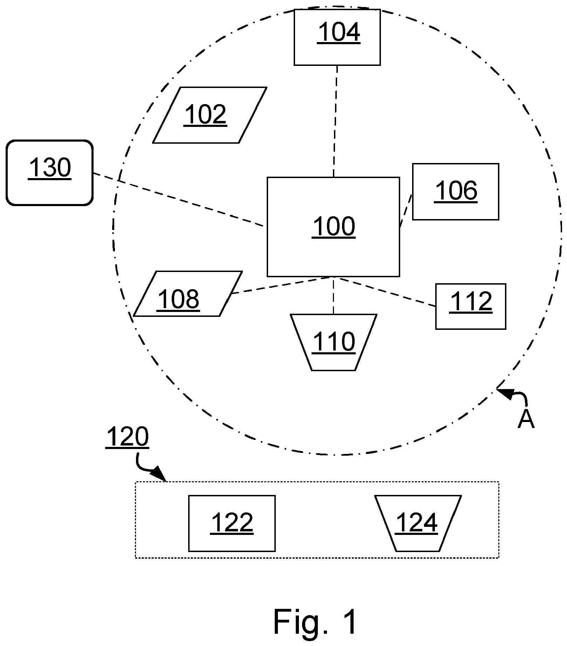

Figure 1 illustrates a distributed processing scheme according to an embodiment of this disclosure. It will be appreciated that Figure 1 is a box diagram and so features are not shown to scale.

As shown in Figure 1, a first computing device 100 is provided. The first computing device 100 may be referred to as the client computing device, or the user computing device. A plurality of computing devices 102 to 124 are geographically remote from the first computing device 100. The plurality of computing devices 102 to 124 may not be associated with the user of the first computing device 100 (i.e., they may not be computing devices in the same home as the first computing device 100).

In some embodiments, the plurality of computing devices 102 to 124 may have a different public IP address compared to the first computing device 100. It will be appreciated that computing devices have a private (or local) IP address and a public IP address. Computing devices that are connected to the same router (usually meaning they are in the same home or building) are assigned a unique private IP address by the router, which generally has the form 192.168.xxx.xxx. The same computing devices (if port forwarded) will have another IP address. In the case of computing devices connected to a work VPN, they have very similar public IP addresses but might not be geographically close.

In this embodiment, computing devices 100 and 104 to 124 have consented to participate in the distributed processing scheme. However, computing device 102 has not consented to participate in the distributed processing scheme, and as such this computing device 102 will not be considered further. Various incentives or reward schemes may be offered to users to encourage participation in the distributed processing scheme.

Computing devices 100 and 104 to 124 may broadcast a signal indicating that the computing device has signed up to the distributed processing scheme. This signal may allow the computing device to be identified by a remote computing device. In some embodiments, the signal may indicate the status of the computing device.

A remote processing device or a remote server 130 is configured to communicate with the first computing device 100 via a communication channel or network (represented by the dotted line). The communication channel may be a wired or a wireless communication channel. The remote processing device 130 may also communicate with the other computing devices in Figure 1, but this is not shown to improve clarity.

In the present disclosure the distributed processing scheme provides the opportunity for computing devices to share a processing task between one or more consenting computing devices. This can improve efficiency and reduce download times or other processing times for a computing device.

Some processing tasks, or portions of a processing task, cannot be executed simultaneously or concurrently by a single processing device. Normally, this would require the processing device to execute said processing tasks, or portions of a processing task, one after the other (i.e. consecutively). Using the distributed processing scheme of the present disclosure, the processing device (i.e., the user's computing device) can share said processing tasks, or portions of a processing task, with one or more additional computing devices, thereby decreasing the processing time.

The distributed processing scheme of the present disclosure may be particularly advantageous for computing devices having a relatively low processor capacity, or computing devices that have a heavy usage and so have a low available processor capacity at a given time. This is because the computing device can make use of one or more computing devices that have a higher processor capacity. In one non-limiting example, if a user's computer device is executing a large processing task, such as post processing multiple large game assets of a video game file, while performing that processing task the user's hard drive will be busy and unable to execute any other tasks. When participating in the distributed processing scheme of the present disclosure, a remote processing device or remote computing device could perform one or more tasks, for example the asset preprocessing for another game asset, while the user's hard drive is busy.

The distributed processing scheme of the present disclosure is defined in more detail below.

The distributed processing scheme comprises identifying a plurality of computing devices (that have consented to participate in the scheme), wherein each identified computing device satisfies at least one criterion of a predetermined list of criteria.

The predetermined criteria may include a geographic criterion. The geographic criterion may specify that a geographical location of each computing device must be within a predetermined range of a geographical location of the first computing device 100. This geographical criterion is shown in Figure 1 by the dotted line labelled A which represents a predetermined range centred on the first computing device 100. As shown, computing devices 122 and 124 are outside of the predetermined range. Accordingly, in some embodiments, computing devices 122 and 124 cannot be selected by the first computing device 100 as part of the distributed processing scheme.

The predetermined list of criteria may include any number of criteria. In some embodiments, each of the criterion must be satisfied for a computing device to be selected as part of the distributed processing scheme. In other embodiments, only one or more specified criteria of the predetermined list of criteria must be satisfied for a computing device to be selected as part of the distributed processing scheme.

In Figure 1, the shape of the boxes indicates the type of computing device. Computing devices 100, 104, 106, 112, 122 have a rectangular shape, which in this non-limiting example represents a gaming console. Computing devices 110 and 124 have a trapezium shape, which in this non-limiting example represents a smart phone or a mobile phone. Computing devices 102 and 108 have a parallelogram shape, which in this non-limiting example represents a desktop PC or a laptop computer. The predetermined list of criteria may include a criterion that requires the computing device to be one of a list of selected types of computing device.

In one non-limiting example, the criterion may specify that the computing device must be either a desktop PC, a laptop computer, or a gaming console. Accordingly, in this example, computing devices 110 and 124 do not satisfy this criterion. As such, in some embodiments, computing devices 110 and 124 cannot be selected by the first computing device 100 as part of the distributed processing scheme.

In one non-limiting example, the predetermined list of criteria includes a processor criterion. The processor criterion may specify that a current processing capability of the computing device must exceed a predetermined limit. The current processing capability may be the available processing power/capacity of the computing device at the given time. In some embodiments, the predetermined limit is at least partially based on a processing capability of the first computing device 100. For example, the processor criterion may specify that the processing capability of the computing device must exceed a current (or maximum) processing capability of the first computing device 100.

In some embodiments, the predetermined limit is at least partially based on estimated or actual requirements of the portion of the processing task.

Preferably, the actual user of each computing device has precedence (or priority) over the processing tasks that are performed on their own computing device. For example, if a local user of computing device 104 is playing a video game on the computing device 104 that is using most of the processing power / resources of the computing device 104, then the computing device 104 may be allocated a low priority value, reflecting the fact that said computing device 104 is in use and cannot currently share processing resources. Optionally, users have the ability to reject a request to share their processing resources as part of the scheme, such as if the user knows that they are about to turn off the device, or use the device.

In some embodiments, if a remote computing device is in use by the local user (or if certain tasks are being executed on the remote computing device), then the remote computing device may not be identified to the first computing device 100 as available to participate in the distributed processing scheme. For example, if a user is playing a game on their video game console, then they may not want to broadcast their gaming console as available to execute processing tasks for other users.

In some embodiments, a criterion of the predetermined list of criteria may be that the remote computing device must have certain files or data downloaded or stored thereon. For example, in a shared video game like scenario, it would be beneficial if the remote computing device has the game assets predownloaded. As such, determining the priority value may include determining whether the remote computing device has certain data downloaded or stored thereon. In this example, a better priority value may be allocated to a remote computing device that already has the video game downloaded. In some embodiments, only remote computing devices that have said video game downloaded may be identified to the first computing device 100.

In the following embodiment, in the interest of simplicity, the predetermined list of criteria may consist of just the geographic, type of computing device and processing capability criteria defined above. Each of these criteria may define a contribution to an overall priority value allocated to the computing device. The priority value may be at least partially determined based on ranking how well each computing device satisfies these three criteria. It will be appreciated that a number of other factors could be taken into account when determining the priority value. A table indicating the priority value determined for each computing device in Figure 1 according to this embodiment of the distributed processing scheme is shown below as Table 1.

In this embodiment, computing devices 122 and 124 do not form part of the identified plurality of computing devices, as they do not satisfy the geographical criterion. This is represented in Figure 1 by the lack of a communication channel (dotted line) between computing devices 122, 124 and the first computing device 100. Thus, computing devices 122 and 124 are not allocated a priority value. As mentioned above, computing device 102 has not consented to the distributed processing scheme and so this computing device is also not included in Table 1. For simplicity, in this embodiment each computing device meets the processor criterion.

**Table 1: example of priority values that may be determined for the eligible computing devices in Figure 1**

| **Computing device ID** | **Allocated priority value** |
|---|---|
| 106 | 1 |
| 112 | 2 |
| 110 | 3 |
| 108 | 4 |
| 104 | 5 |

In the example shown in Table 1, the computing devices have been ranked in order of their priority value. Computing device 106 has been allocated the best priority value of 1, as this computing device is a) geographically closest to the first computing device 100 and b) is a gaming console, which in this example is a preferred type of computing device for this processing task. Computing device 104 has been allocated the worst priority value of 5, as this is geographically furthest from the first computing device 100. The computing device 110 is a mobile phone and has a lower processing capacity compared to computing device 112, thus even though computing device 110 is geographically closer to the first computing device 100 it has a lower priority value than computing device 112. It will be appreciated that the relative weighting applied to each criterion may vary.

In some embodiments, one or more criterion of the predetermined list of criteria may be "YES / NO" criteria which may not contribute to the priority value of the computing device. If such a "YES / NO" criterion is not satisfied, the computing device may not be selected by the first computing device 100 as part of the distributed processing scheme.

It will be appreciated that in other embodiments the highest priority value (e.g. 100) may be the best priority value, and the lowest priority value (e.g. 1) may be the worst priority value. The values shown in Table 1 are non-limiting examples of possible priority values.

In some embodiments, determining the priority value allocated to each computing device may comprise assessing one or more properties of a wireless communication channel between the first computing device 100 and the computing device. The priority value may be at least partially based on an outcome of the assessment. The assessment may comprise executing a ping test. Computing devices having a lower ping value may be prioritised over computing devices having a higher ping value. Generally, a ping test provides the round trip time for a packet of data to be sent from a local device to a server and back again. A ping test is a good measure of how reliable a wireless communication channel should be. However, other tests, such as a traceroute test or other tests to measure latency, may be used.

In some embodiments, the priority value may be calculated at least partially based on the number of servers between the first computing device and the remote computing device. A remote computing device having minimal servers between said remote computing device and the first (local) computing device may be allocated a better priority value.

Optionally, the processing task (or a portion of the processing task) includes downloading or decoding a digital resource sent by the remote processing device 130. Determining the priority value for each computing device may comprise assessing one or more properties of a second wireless communication channel between the computing device and the remote processing device 130. The priority value may be at least partially based on an outcome of the assessment. The assessment may comprise executing a ping test. Computing devices having a lower ping value may be prioritised over computing devices having a higher ping value. As detailed above, other tests, such as other tests to measure latency, could be used.

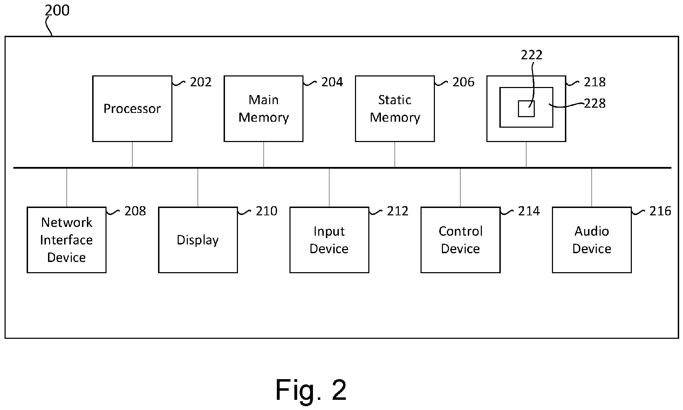

Figure 2 is a block diagram of one example implementation of a computing device 100 to 124 according to an embodiment of the present disclosure. The computing device is associated with executable instructions for causing the computing device to perform any one or more of the methodologies discussed herein. In some implementations, the computing device 200 may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 200 includes a processing device 202, a main memory 204 (e.g., read-only memory (ROM), flash memory, dynamic random-access memory (DRAM) such as synchronous DRAM (SDRAM) or Rambus DRAM (RDRAM), etc.), a static memory 206 (e.g., flash memory, static random-access memory (SRAM), etc.), and a secondary memory (e.g., a data storage device 218), which communicate with each other via a bus 230.

Processing device 202 represents one or more general-purpose processors such as a microprocessor, central processing unit, or the like. More particularly, the processing device 202 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 202 may also be one or more special-purpose processing devices such as an application specific integrated circuit (ASIC), a field programmable gate array (FPGA), a digital signal processor (DSP), network processor, or the like. Processing device 202 is configured to execute the processing logic (instructions 222) for performing the operations and steps discussed herein.

The computing device 200 may further include a network interface device 208. The computing device 200 also may include a video display unit 210 (e.g., a liquid crystal display (LCD) or a cathode ray tube (CRT)), an alphanumeric input device 212 (e.g., a keyboard or touchscreen), a cursor control device 214 (e.g., a mouse or touchscreen), and an audio device 216 (e.g., a speaker).

The data storage device 218 may include one or more machine-readable storage media (or more specifically one or more non-transitory computer-readable storage media) 228 on which is stored one or more sets of instructions 222 embodying any one or more of the methodologies or functions described herein. The instructions 222 may also reside, completely or at least partially, within the main memory 204 and/or within the processing device 202 during execution thereof by the computer system 200, the main memory 204 and the processing device 202 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid-state memory, magnetic tape, a removable computer diskette, a random-access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilising terms such as "providing", "calculating", "computing," "identifying", "detecting ", "establishing" , "training", "determining", "storing", "generating" ,"checking", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

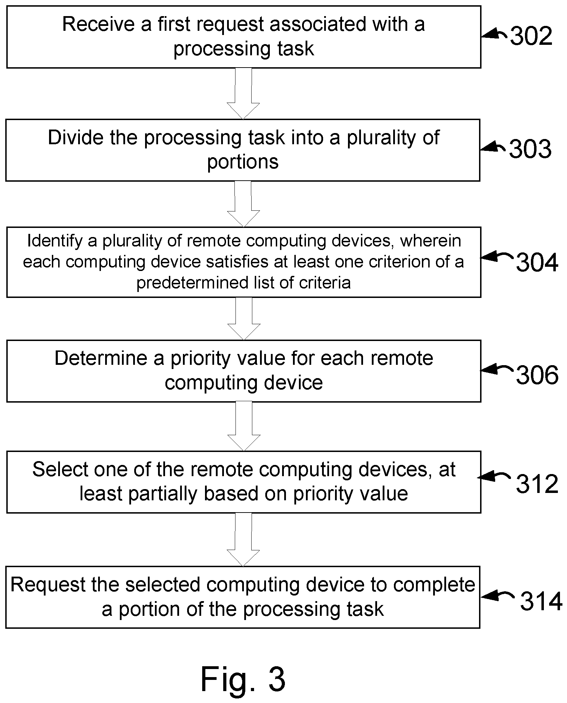

Figure 3 is a flowchart illustrating a distributed processing scheme according to an embodiment of this disclosure. This flowchart is from the perspective of the first computing device 100.

At step 302 the method includes receiving a first request associated with a processing task. The request may be initiated by a user action, such as the user initiating a video game on the first computing device 100. In some embodiments, the request may be received from a remote processing device 130.

Optionally, the method may include step 303, wherein the processing task is divided into a plurality of portions. In other embodiments, this step may be skipped, as the entire processing task may be outsourced to a single remote computing device.

At step 304 the method comprises identifying a plurality of remote computing devices, wherein each computing device satisfies at least one criterion of a predetermined list of criteria. This is discussed above in relation to Figure 1. Optionally, the predetermined list of criteria may be used as search terms to identify the plurality of computing devices.

In an embodiment, each computing device that has agreed to participate in the distributed processing scheme may be required to have a service running which broadcasts the computing device as available (i.e. signed-up to participate in distributed processing). This may make it easier for a computing device to identify remote computing devices at step 304 of the method.

In some embodiments, if a remote computing device is not in an active state (i.e. powered on or turned on) then said remote computing device may not be identified in step 304. For example, the service may not broadcast that the computing device is available if is not in an active state.

In some embodiments, remote computing devices which are not in an active state may be identified at step 304, but a criterion of the predetermined list of criteria may be that the computing device must be in an active state. As such, any computing devices which are not in an active state may not be included in the plurality of computing devices.

In some embodiments, the remote computing device may not be identified in step 304 if certain criteria are not satisfied. Alternatively, remote computing devices may be identified, but they may not be selected if certain criteria are not satisfied.

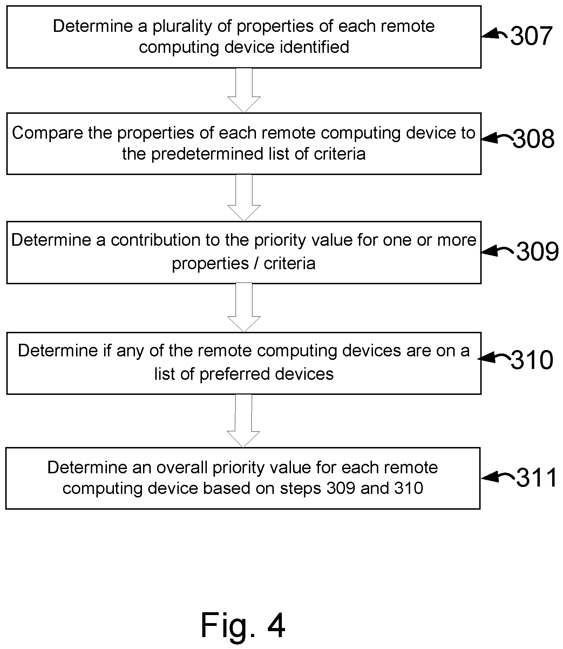

At step 306, the method comprises determining a priority value for each of the plurality of remote computing devices. This is discussed in more detail in relation to Figure 4, and is also discussed above in relation to Figure 1 and Table 1.

At step 312, the method comprises selecting one of the remote computing devices, at least partially based on their allocated priority value. In some embodiments, the remote computing device having the best, or most preferable, priority value is selected.

Optionally, if step 303 applies, then step 312 may comprise selecting one of the remote computing devices for each of the portions of the processing task. In some embodiments, at least step 306 may be repeated for each portion of the processing task, as each portion of the processing task may have different requirements or different predetermined criteria.

At step 314, the method comprises sending a request to the selected remote computing device instructing said remote computing device to complete a portion of the processing task. In some embodiments, the request may instruct said remote computing device to complete two or more portions of the processing task.

In some embodiments, step 314 comprises sending a plurality of requests to a plurality of the remote computing devices.

In some embodiments, before sending a request to the selected remote computing device, the first computing device may initiate a security check on the selected remote computing device. The security check may scan the remote computing device for malware or computer viruses. The security check may verify that one or more credentials of the remote computing device are up to date. If the remote computing device fails the security check, or the security check identifies one or more potential risks, then the remote computing device may be deselected. The method may return to step 312, for example to select the remote computing device having the next best priority value.

In some embodiments, the security check may be carried out before, or as part of, the selection step 312. In some embodiments, the security check may be carried out as part of step 306 to determine the priority value of each remote computing device.

With regards to determining a priority value allocated to each of the plurality of remote computing devices, more detail is provided in Figure 4. Figure 4 is a flowchart showing a portion of a distributed processing scheme according to an embodiment of this disclosure, which may take place between step 306 and step 312 in Figure 3.

At step 307, the method includes determining a plurality of properties of each remote computing device that has been identified. At least some of these properties are preferably related to the predetermined list of criteria. The properties may include, but are not limited to, a geographic location of the computing device, a type or specification of the computing device, a current processing capability (or available processing power) of the computing device.

In some embodiments, at step 307 the one or more properties of each remote computing device may include at least one security related property, such as security credentials, software versions / update status running on the remote computing device, virus and malware protection, etc. These security related properties may be considered in the calculation of the priority value.

For example, if the remote computing device is a mobile phone, and the mobile phone is operating on an old or unsupported version of Android^{®}, such that the mobile phone is no longer receiving security updates, then the mobile phone may be allocated a very low priority value, or the mobile phone may be removed from the plurality of computing devices.

At step 308, the method includes comparing the properties of each remote computing device to the predetermined list of criteria. At step 309, the method includes determining a contribution to the priority value for one or more of the properties or criteria, which is at least partially based on the comparison in step 308. In some embodiments, steps 308 and 309 may be combined in a single step.

Step 309 may include determining a contribution to the priority value based on the geographic location of the remote computing device relative to the first computing device 100. As described in connection with Table 1, the remote computing device that is geographically closest to the first computing device 100 may have the best contribution to the priority value.

It will be appreciated that any number of factors/properties may be considered in the calculation of the priority value. In some embodiments, step 309 may include determining a contribution to the priority value based on the current processing capability of each remote computing device, and/or the type of remote computing device.

At step 310, the method includes determining if any of the remote computing devices are on a list of preferred devices. The remote computing devices may be added to the list of preferred devices by the user of the first computing device 100. In some embodiments, the remote computing devices may be added to the list of preferred devices automatically (or by the first computing device) based on an existing contacts or friend list. In some embodiments, if a remote computing device has successfully communicated with the first computing device, either as part of the distributed processing scheme or otherwise, then the remote computing device may be added to the list of preferred devices. The list of preferred computing devices or vendors may be advantageous, as the first computing device may be more likely to receive a response from computing devices on said list, which may reduce the number of failed requests sent.

In some embodiments, if the first computing device and a respective remote computing device have connected (or shared data) before, then the information that needs to be shared between the two devices can be cached and subsequently retrieved from the cache. This can make the initial connection process quicker. As such, using a preferred device can reduce delays and improve efficiency.

For example, splitting the processing of a video game between two computing devices would usually require each device to share the same save game data. Therefore, it is often quicker to connect to a remote computing device that has already been connected with before, because this should mean less save game data is required to be uploaded.

At step 311, the method includes determining an overall priority value for each remote computing device, based on the outcomes of steps 309 and 310. Each contribution or factor may be allocated a specific weighting in the calculation used to determine the priority value. Although no specific equation is provided here, it will be appreciated that a variety of different equations or calculations could be used by the skilled person.

After step 311 the method may then proceed to step 312 as described in connection with Figure 3.

It will be appreciated that the order of the steps shown in Figure 4 (and Figure 3) is not limiting, and some of the steps may equally be performed in a different order. For example, step 307 may be performed as part of step 304, or step 310 may be performed before step 307, etc.

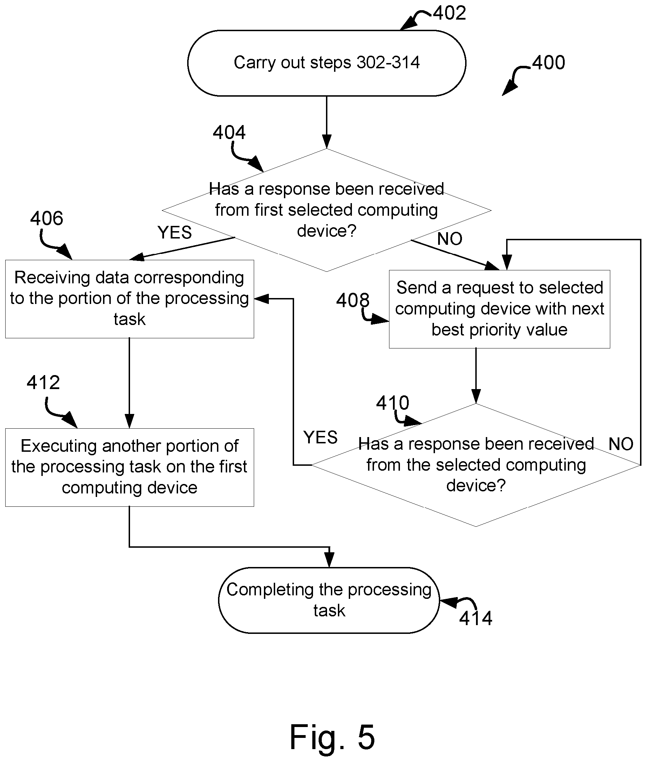

Figure 5 is a flowchart showing a portion 400 of a distributed processing scheme according to an embodiment of this disclosure, which may take place after step 312 in Figure 3 (i.e. after the request has been sent to the first selected remote computing device). As such, step 402 of the method involves following the distributed processing scheme as defined in Figures 3 and 4.

At step 404 the method includes determining whether a response has been received at the first computing device from the first selected computing device. There may be a predetermined time period wherein, when the request has been transmitted and the predetermined time period has elapsed with no response received from the first selected computing device, then the request is deemed to have failed.

If a response is received from the first selected computing device, within the predetermined time period, then the method proceeds to step 406 wherein data corresponding to the portion of the processing task allocated to the first selected computing device is received at the first computing device 100.

If a response is not received from the first selected computing device (within the predetermined time period), the method proceeds to step 408. At step 408, a request is sent from the first computing device 100 to another of the remote computing devices, preferably the remote computing device having the next best priority value.

At step 410 it is determined whether a response has been received at the first computing device 100 from the selected computing device. If no response is received within a predetermined time period, then the request is deemed to have failed.

If the request is deemed to have failed, then the method returns to step 408 and a request is sent to another of the remote computing devices. This continues until a request is successful, or until all of the remote computing devices have been contacted.

In the event that a response is not received from any of the remote computing devices, which is not shown in Figure 5, then in some embodiments the distributed processing scheme may be deemed to have failed. The first computing device 100 may then proceed to execute the processing task independently. An electronic notification may be displayed on the first computing device.

Optionally, in the event that a response is not received from any of the remote computing devices, then in some embodiments the predetermined list of criteria may be changed in order to identify additional remote computing devices (i.e., to widen the pool of remote computing devices). For example, the geographic criterion may be changed to widen or expand the predetermined range from the first computing device. Optionally, one or more criteria may be removed. The method can then restart at step 302.

After step 406 (when a response has been successfully received) the method may then proceed to step 412 wherein another portion of the processing task is executed on the first computing device. This is optional, as in some embodiments no portion of the processing task may be performed by the first computing device. In some embodiments, the entire processing task may be performed by a single remote computing device. In some embodiments, the method 400 in Figure 5 may be repeated for a plurality of portions of the processing task.

At step 414, the processing task is completed, and the distributed processing scheme ends.

Accordingly, there has been described a computer-implemented method of executing a distributed processing scheme, the method comprising receiving, at a first computing device, a first request associated with a processing task, identifying a plurality of computing devices, wherein each computing device of the plurality of computing devices is remote from the first computing device and each computing device satisfies at least one criterion of a predetermined list of criteria, determining a priority value for each computing device, wherein the priority value is at least partially based on the predetermined list of criteria, selecting one of the computing devices, wherein the selection is determined at least partially based on the priority value of each computing device, sending a second request from the first computing device to the selected computing device via a wireless communication channel, the second request instructing the selected computing device to complete a portion of the processing task.

The method may be repeated for a plurality of portions of the processing task.

Although particular embodiments of this disclosure have been described, it will be appreciated that many modifications/additions and/or substitutions may be made within the scope of the claims.

It is to be understood that the above description is intended to be illustrative, and not restrictive. Many other implementations will be apparent to those of skill in the art upon reading and understanding the above description. Although the disclosure has been described with reference to specific example implementations, it will be recognised that the disclosure is not limited to the implementations described but can be practiced with modification and alteration within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method of executing a distributed processing scheme, the method comprising:
receiving, at a first computing device, a first request associated with a processing task;
identifying a plurality of computing devices, wherein each computing device of the plurality of computing devices is remote from the first computing device and each computing device satisfies at least one criterion of a predetermined list of criteria;
determining a priority value for each computing device of the plurality of computing devices, wherein the priority value is at least partially based on the predetermined list of criteria;
selecting one of the plurality of computing devices, wherein the selection is determined at least partially based on the priority value determined for each computing device;
sending a second request from the first computing device to the selected computing device via a wireless communication channel, the second request instructing the selected computing device to complete a portion of the processing task.

2. The computer-implemented method of claim 1, further comprising determining whether any of the plurality of computing devices is on a list of preferred devices, and/or determining whether any of the plurality of computing devices has successfully communicated with the first computing device previously, wherein the priority value is at least partially based on said determination.

3. The computer-implemented method of any preceding claim, wherein the predetermined list of criteria includes the following geographic criterion:
a geographical location of the computing device is within a predetermined range of a geographical location of the first computing device; and
wherein determining the priority value for each computing device includes determining a contribution to the priority value based on the geographic criterion, wherein the computing device that is geographically closest to the first computing device will have the best contribution to the priority value.

4. The computer-implemented method of any preceding claim, wherein the predetermined list of criteria includes the following processor criterion:
a current processing capability of the computing device exceeds a predetermined limit.

5. The computer-implemented method of claim 4, wherein the predetermined limit is at least partially based on a processing capability of the first computing device; and/or
wherein the predetermined limit is at least partially based on estimated or actual requirements of the portion of the processing task.

6. The computer-implemented method of claim 4 or claim 5, wherein determining the priority value for each computing device includes determining a contribution to the priority value based on the processor criterion, wherein the computing device that has the greatest available processing capability will have the best contribution to the priority value.

7. The computer-implemented method of any preceding claim, wherein the predetermined list of criteria includes:
the computing device is in an active state or an available state.

8. The computer-implemented method of any preceding claim, wherein the predetermined list of criteria includes:
the computing device is one of a list of selected types of computing device.

9. The computer-implemented method of claim 8, wherein the list of selected types of computing device is dependent on one or more properties of the processing task, or the portion of the processing task.

10. The computer-implemented method of any preceding claim, wherein determining the priority value for each computing device includes assessing one or more properties of the wireless communication channel between the first computing device and the computing device, wherein the priority value is at least partially based on an outcome of the assessment.

11. The computer-implemented method of any preceding claim, wherein if no response, or a negative response, is received at the first computing device to the second request after a given period of time has elapsed, the method further comprises:
sending a third request from the first computing device to a second selected computing device of the plurality of computing devices via a wireless communication channel.

12. The computer-implemented method of claim 11, wherein:
the selected computing device has the best priority value of the plurality of computing devices; and
the second selected computing device has the second-best priority value of the plurality of computing devices.

13. The computer-implemented method of any preceding claim, further comprising:
dividing the processing task into a plurality of portions; and
sending a respective request from the first computing device to two or more selected computing devices of the plurality of computing devices via a respective wireless communication channel, each request instructing the selected computing device to complete at least one respective portion of the processing task.

14. A computing device comprising:
a processor; and
memory, the memory communicatively coupled to the processor, the memory comprising instructions operable, when executed by the processor, to cause the processor to carry out the method of any preceding claim.

15. A computer program comprising instructions which when executed in a computerized system comprising at least one processor, cause the at least one processor to carry out the method of any one of claims 1 to 13.
